# EUROPÄISCHE PATENTANMELDUNG

(11) **EP 4 492 510 A1**
(43) Veröffentlichungstag der Anmeldung: **15.01.2025**
(21) Anmeldenummer: 24183065.2
(22) Anmeldetag: 19.06.2024
(51) Int. Cl.: H01M 8/04089, H01M 8/04223, H01M 8/04537, H01M 8/04746, H01M 8/04791, H01M 8/04225, H01M 8/04302, H01M 8/10

(54) **ANODENMODUL, PEM-BRENNSTOFFZELLENSYSTEM SOWIE VERFAHREN ZUM BETREIBEN**

(30) Priorität: 04.07.2023 DE 102023117662
(71) Anmelder: Deutsches Zentrum für Luft- und Raumfahrt e.V., 53227 Bonn (DE)
(72) Erfinder: Becker, Florian, 22129 Hamburg (DE)
(74) Vertreter: VKK Patentanwälte PartG mbB

(57) **Zusammenfassung**

Um ein Anodenmodul (1) für ein Polymerelektrolytbrennstoffzellensystem (5), umfassend mindestens einen Einlass (2) zur Einleitung von Betriebsgas in eine Betriebsgasleitung (3) und einen Anodenauslass (4) zum Anschließen an einen Anodeneingang (6) des Polymerelektrolytbrennstoffzellensystems (5), anzugeben, welches unter Vermeidung der Nachteile des Standes der Technik einen möglichst langlebigen und effizienten Betrieb einer PEM-Brennstoffzelle auch beim Hochfahren aus dem Leerlauf ermöglicht, wird vorgeschlagen, dass Regelungsmittel (22) zum Regeln des Wasserstoffpartialdrucks am Anodenauslass (4) in Abhängigkeit von Betriebsparametern des Polymerelektrolytbrennstoffzellensystems (5) vorgesehen sind.

## Beschreibung

Die vorliegende Erfindung betrifft ein Anodenmodul für ein Polymerelektrolytbrennstoffzellensystem (nachfolgend auch "PEM-Brennstoffzellensystem" genannt), umfassend mindestens einen Einlass zur Einleitung von Betriebsgas in eine Betriebsgasleitung und einen Anodenauslass zum Anschließen an einen Anodeneingang des Polymerelektrolytbrennstoffzellensystems.

Ferner betrifft die vorliegende Erfindung ein Polymerelektrolytbrennstoffzellensystem.

Schließlich betrifft die vorliegende Erfindung ein Verfahren zum Betreiben eines Polymerelektrolytbrennstoffzellensystems, bei dem eine Brennstoffzellenspannung des Polymerelektrolytbrennstoffzellensystems gemessen wird.

Derartige Anodenmodule dienen der Versorgung der Anode einer PEM-Brennstoffzelle mit Wasserstoff, um die elektrochemische Reaktion zur Erzeugung einer elektrischen Spannung zu ermöglichen. Dabei soll die Steuerung des PEM-Brennstoffzellensystems nach aktuellen Anforderungen insbesondere auch derart erfolgen, dass die Effizienz und vor allem die Langlebigkeit der Brennstoffzelle gewährleistet ist. Insbesondere beim Hochfahren eines PEM-Brennstoffzellensystems, im Leerlaufbetrieb sowie beim Versetzen in den Ruhezustand besteht die Gefahr einer die Langlebigkeit des Systems gefährdenden Schädigung der katalytischen Schichten. Der Grund ist, dass sich vor dem Start eines PEM-Brennstoffzellensystems sowohl anodenseitig als auch kathodenseitig Luft befindet. Man spricht daher beim Hochfahren des Systems von einem "Air/Air-Start". Wenn beim Start der Anode über den Anodenauslass eines an das PEM-Brennstoffzellensystem angeschlossenes Anodenmoduls Wasserstoff zugeführt wird, bildet sich daher auf der Anode eine Grenzschicht zwischen Luft und Wasserstoff. Man spricht hier von der "H2/Air-Front". Dies kann in den Bereichen der PEM-Brennstoffzelle, in denen sich noch anodenseitige Luft befindet, zu einer hohen Potenzialdifferenz zwischen Anode und Kathode, beispielsweise von bis zu 1,443 V, führen. Derartig hohe Potenziale haben indes einen erheblichen Einfluss auf die Kohlenstoffkorrosion der katalytischen Schichten des Brennstoffzellensystems. Aber auch im Ruhezustand eines PEM-Brennstoffzellensystems können höhere Zellspannungen, beispielsweise oberhalb von 850 mV, degradierend wirken.

Um diese Problematik insbesondere beim Starten eines PEM-Brennstoffzellensystems anzusprechen, wurden im Stand der Technik unterschiedliche An- und Abschaltzyklen vorgeschlagen. Diese sollen die Brennstoffzelle weniger belasten und so eine erhöhte Lebensdauer der Brennstoffzelle sicherstellen.

So ist aus der EP 2 678 895 B1 ein Verfahren zur Steuerung der PEM-Brennstoffzellenspannung während Leistungsübergängen und Leerlauf vorbekannt. Das vorbekannte Verfahren sieht im Wesentlichen eine Beeinflussung des Kathodengases, eine Beeinflussung des Kathodengasflusses, eine Zwischenspeicherung nicht benötigter, von der Brennstoffzelle erzeugter Energie bzw. ein Dissipieren von Energie über eine elektrische Last vor. Dabei vermeidet das Dissipieren oder Speichern von Energie de facto das Betreiben der PEM-Brennstoffzelle im Leerlauf, auch wenn von dem PEM-Brennstoffzellensystem keine Leistung abgefordert wird, beispielsweise weil ein von diesem angetriebenes Fahrzeug sich im Stillstand befindet.

Nachteilig an dem vorbekannten Verfahren ist, dass die Brennstoffzelle momentan nicht benötigte Energie produziert, welche entweder durch aufwendige Speichereinrichtungen gespeichert werden muss oder schlichtweg unter Verminderung des Wirkungsgrades der Brennstoffzelle nutzlos dissipiert werden muss.

Ein Leerlaufbetrieb eine PEM-Brennstoffzelle ist insbesondere im Bereich der Luftfahrt von praktischer Relevanz. Denn wenn ein mit einem PEM-Brennstoffzellensystem angetriebenes Flugzeug über die Startbahn rollt und anschließend auf der Startbahn auf die Startfreigabe wartet, befindet sich die Brennstoffzelle längere Zeit nahe des Leerlaufbetriebes. Anschließend muss die PEM-Brennstoffzelle dann für den Start so schnell wie möglich auf die maximale Leistung gehoben werden. Sowohl bei dem längeren Betrieb im Leerlauf als auch beim abrupten Wechsel auf maximale Leistung besteht die geschilderte Problematik für die Langlebigkeit des PEM-Brennstoffzellensystems.

Vor dem geschilderten Hintergrund liegt der vorliegenden Erfindung die Aufgabe zugrunde, ein Anodenmodul der eingangs genannten Art, ein PEM-Brennstoffzellensystem mit einem Anodenmodul sowie ein Verfahren zum Betreiben eines PEM-Brennstoffzellensystems der eingangs genannten Art anzugeben, welche unter Vermeidung der Nachteile des Standes der Technik einen möglichst langlebigen und effizienten Betrieb einer PEM-Brennstoffzelle auch beim Hochfahren aus dem Leerlauf ermöglichen.

Mit Bezug auf ein Anodenmodul der eingangs genannten Art wird die zugrundeliegende Aufgabe erfindungsgemäß dadurch gelöst, dass Regelungsmittel zum Regeln des Wasserstoffpartialdrucks am Anodenauslass des PEM-Brennstoffzellensystems in Abhängigkeit von Betriebsparametern des Polymerelektrolytbrennstoffzellensystems vorgesehen sind.

Mit Vorteil ermöglicht eine Regelung des Wasserstoffpartialdrucks einen unmittelbaren Eingriff in die Ursache der Probleme, die sich insbesondere beim Hochlaufen aus dem Leerlaufbetrieb des Brennstoffzellensystems ergeben. Indem an der Anodenseite der Partialdruck des Brennstoffwasserstoff beeinflusst wird, entfällt mit Vorteil die Notwendigkeit der Zwischenspeicherung oder gar Dissipation von momentan nicht benötigter Energie. Eine Beeinflussung des Wasserstoffpartialdrucks in Abhängigkeit von Betriebsparametern des PEM-Brennstoffzellensystems vermag daher die Langlebigkeit des Systems zu gewährleisten, ohne dabei Einbußen bei der Effizienz in Kauf nehmen oder aufwendige Zwischenspeicherungsmedien vorsehen zu müssen.

In bevorzugter Ausgestaltung des erfindungsgemäßen Anodenmoduls umfassen die Betriebsparameter eine Brennstoffzellenspannung des PEM-Brennstoffzellensystems. Vorzugsweise umfassen die Betriebsparameter im Rahmen der Erfindung dabei mindestens eine Einzelzellspannung. Aufgrund der eingangs geschilderten Mechanismen bei der Bildung einer H2/Air-Front manifestiert sich ein das Brennstoffzellensystem schädigender Zustand entweder in unerwünschten Werten der Brennstoffzellenspannung insgesamt oder zumindest in Einzelzellspannungen einzelner Zellen des Stack. Im Rahmen der Erfindung können als Betriebsparameter aber auch weitere Größen dienen, wie zum Beispiel Druck, Temperatur in der Betriebsgasleitung, Volumendurchfluss, Massendurchfluss oder relative Feuchtigkeit. Geeignet ist jeder Betriebsparameter, welcher geeignet ist, einen die Brennstoffzelle schädigenden Zustand zu detektieren.

In bevorzugter Ausgestaltung des erfindungsgemäßen Anodenmoduls sind mit den Regelungsmitteln in Wirkverbindung stehende Inertgasversorgungsmittel zum Einleiten eines Inertgases, insbesondere Stickstoff, in den Einlass vorgesehen. Durch diese Maßnahme ist es mit Vorteil mit dem erfindungsgemäßen Anodenmodul möglich, den Wasserstoffpartialdruck zu variieren. Bei gleichbleibender Wasserstoffzufuhr vermindert sich der Wasserstoffpartialdruck, wenn zusätzlich ein Inertgas eingeleitet wird. Zudem kann mit Vorteil das Inertgas eine Spülung des Anodensystems bewirken, wodurch die elektrochemische Reaktion der Brennstoffzelle und damit die sich ergebende Zellspannung zielgerichtet beeinflusst werden kann.

Im Zusammenhang mit den Inertgasversorgungsmitteln ist es im Rahmen der Erfindung bevorzugt, wenn diese ein, insbesondere linear ansteuerbares, Regelventil umfassen. Durch diese Ausgestaltung vermag ein Regler die Erhöhung des Partialdrucks des Inertgases bei gleichzeitiger Verminderung des Wasserstoffpartialdrucks kontinuierlich anzupassen. Alternativ zu einem linear ansteuerbaren Regelventil kann jedoch auch ein Magnetventil zeitlich gesteuert werden, um diese Wirkung zu erzielen.

Vorteilhaft ist bei den in Ausgestaltung des erfindungsgemäßen Anodenmoduls ein Anodenabgaseinlass zum Einleiten von Anodenabgas des Polymerelektrolytbrennstoffzellensystems in das Anodenmodul vorgesehen. Durch diese Maßnahme vermag das erfindungsgemäße Anodenmodul Anodenabgas zum Spülen zu verwenden. Dies ist insbesondere beim Hochlaufen aus einem Leerlaufzustand der PEM-Brennstoffzelle zur Variierung des Wasserstoffpartialdrucks von Vorteil.

In diesem Zusammenhang ist es günstig, wenn bei dem erfindungsgemäßen Anodenmodul eine Anodenabgasauslassleitung vorgesehen ist. Über die Anodenabgasauslassleitung lässt sich eine Spülung des Anodenmoduls zur schnellen Beeinflussung des Wasserstoffpartialdrucks besonders vorteilhaft bewirken.

Die Anodenabgasauslassleitung kann in Weiterbildung der Erfindung ein mit den Regelungsmitteln in Wirkverbindung stehendes, insbesondere linear regelbares, Spülventil aufweisen. Diese Maßnahme ermöglicht es, die Spülwirkung gezielt in Reaktion auf das Brennstoffzellensystem schädigende Zustände zu erhöhen oder zu vermindern.

Eine zusätzliche Möglichkeit zur schnellen Variierung des Wasserstoffpartialdrucks erhält man in vorteilhafter Ausgestaltung des erfindungsgemäßen Anodenmoduls, wenn eine den Anodenabgaseinlass mit dem Anodenauslass verbindende Rezirkulationsleitung vorgesehen ist.

Um den durch die Rezirkulationsleitung geführten Strömungsanteil zur gezielten Variierung des Wasserstoffpartialdrucks an der Anode des Brennstoffzellensystems gezielt zu steuern, sieht eine Variante des erfindungsgemäßen Anodenmoduls vor, dass die Rezirkulationsleitung eine mit den Regelungsmitteln in Wirkverbindung stehende Rezirkulationspumpe aufweist.

In weiterer vorteilhafter Ausgestaltung weist die Rezirkulationsleitung des erfindungsgemäßen Anodenmoduls Rückschlagverhinderungsmittel zur Verhinderung eines Gasstroms in Richtung vom Anodenauslass zum Anodenabgaseinlass auf. Beispielsweise kann zu diesem Zweck ein Schwebekörperdurchflussmesser, auch Rotameter genannt, eingesetzt werden. Dieses ermöglicht im Rezirkulationsbetrieb eine Durchflussmessung des durch die Rezirkulationsleitung geführten Gasstroms. Andererseits wirkt es als Rückschlagventil bei einer Strömungsrichtungsumkehr. Ein Schwebekörper-Durchflussmesser besteht aus einem konischen Rohr, das von unten nach oben von dem Fluid durchströmt wird. In dem Konus befindet sich ein vertikal beweglicher Schwebekörper, welcher bei umgekehrter Strömungsrichtung den Durchfluss abriegelt.

Eine zusätzliche Möglichkeit zur Verhinderung von das Brennstoffzellensystem schädigenden Zuständen insbesondere beim Hochlaufen aus dem Leerlauf erhält man, wenn gemäß einer Weiterbildung des erfindungsgemäßen Anodenmoduls die Regelungsmittel zum Steuern einer zwischen die Anode und die Kathode des Polymerelektrolytbrennstoffzellensystems geschalteten elektrischen Spannungsbegrenzungslast ausgebildet sind. Im Zusammenwirken mit einer Variierung des Wasserstoffpartialdrucks auf der Anodenseite ermöglicht diese Maßnahme eine Betriebsweise des Anodenmoduls, welche ein Hochlaufen des Brennstoffzellensystems aus dem ausgeschaltetem Zustand sowie dem Betrieb im Leerlauf für das System schonender Weise sicherstellt.

Bevorzugt weist bei dem Anodenmodul gemäß der Erfindung die Betriebsgasleitung ein mit einer Kathode des Polymerelektrolytbrennstoffzellensystems in Wirkverbindung bringbares Differenzdruckventil auf, um einen vorgegebenen Differenzdruck zwischen dem Anodenauslass und der Kathode einzustellen. Das Differenzdruckventil kommuniziert dabei bevorzugt über eine Pilotleitung mit der Kathodenseite.

Die auf ein Polymerelektrolytbrennstoffzellensystem gerichtete zugrundeliegende Aufgabe wird erfindungsgemäß durch ein solches System gelöst, welches ein Anodenmodul gemäß der Erfindung aufweist.

Die auf ein Verfahren gerichtete Aufgabe wird durch ein Verfahren der eingangs genannten Art gelöst, bei welchem in Abhängigkeit der gemessenen Brennstoffzellenspannung der anodenseitige Wasserstoffpartialdruck variiert wird. Diese Verfahrensweise ermöglicht mit Vorteil ein direktes Gegensteuern bei die Brennstoffzelle schädigenden Betriebszuständen, ohne dass eine aufwendige Zwischenspeicherung von Energie oder eine effizienzmindernde Dissipierung von Energie erforderlich ist.

Insbesondere ist in Ausgestaltung des Verfahrens vorgesehen, dass der Wasserstoffpartialdruck vermindert wird, indem der Anode ein Inertgas, vorzugsweise Stickstoff, zugeführt wird. Die Zufuhr von Stickstoff oder einem anderen Inertgas vermindert mit Vorteil einerseits den Wasserstoffpartialdruck, entfaltet dabei jedoch gleichzeitig mit Vorteil eine Spülwirkung, welche beim Hochfahren aus dem ausgeschaltetem Zustand zur schnellen Entfernung beispielsweise einer H2/Air-Front beiträgt.

Im Rahmen des erfindungsgemäßen Verfahrens kann der Wasserstoffpartialdruck erhöht werden, indem ein Anodengas abgeführt wird. Im Rahmen der Erfindung wurde festgestellt, dass beim Hochfahren nach vorheriger Inertisierung des Anodensystems eine ungleichmäßige Verteilung des Wasserstoffpartialdrucks im Anodensystem vorherrscht. Es wurde von den Erfindern festgestellt, dass eine gezielte Abführung von wasserstoffarmen Anodenabgas bei gleichzeitiger Nachführung von Wasserstoff der Wasserstoffpartialdruck dahingehend beeinflussen kann, dass eine gleichmäßige Zellspannungsverteilung erreicht wird.

Insbesondere wird gemäß dem erfindungsgemäßen Verfahren das Polymerelektrolytbrennstoffzellensystem aus einem Ruhezustand, bei welchem sich auf beiden Elektroden Luft befindet, hochgefahren. Gerade bei dieser Betriebsweise ist die erfindungsgemäße Variierung des Wasserstoffpartialdrucks in Abhängigkeit von gemessenen Betriebsparametern, insbesondere der Brennstoffzellenspannung, vorzugsweise mindestens einer Einzelzellenspannung, vorteilhaft.

Besonders günstig ist es im Rahmen des erfindungsgemäßen Verfahrens, wenn mindestens eine, vorzugsweise alle, Einzelzellspannung(en) gemessen wird/werden. Der Grund ist, dass bei dem kritischen Hochfahren der Brennstoffzelle aus einem Ruhezustand heraus häufig noch eine inhomogene Verteilung des Wasserstoffpartialdrucks über die einzelnen Zellen des Anodensystems vorherrscht. Daher kann in einzelnen Zellen ein die jeweilige Zelle potentiell schädigender Zustand vorherrschen, wohingegen gleichzeitig in anderen Zellen keine kritischen Zustände vorherrschen. Dies kann sich beispielsweise messtechnisch darin äußern, dass in einer betroffenen Zelle die Spannung stark abfällt.

In vorteilhafter Ausgestaltung des erfindungsgemäßen Verfahrens wird in Reaktion darauf, dass die Brennstoffzellenspannung und/oder eine Einzelzellspannung einen vorbestimmten Schwellenwert unterschreitet, der Wasserstoffpartialdruck erhöht. Hierdurch kann mit Vorteil eine Schädigung der Zelle vermieden werden.

Wenn in anderer vorteilhafter Ausgestaltung des Verfahrens in Reaktion darauf, dass die Brennstoffzellenspannung und/oder eine Einzelzellenspannung einen vorbestimmten Schwellenwert überschreitet, der Wasserstoffpartialdrucks abgesenkt wird, kann ebenfalls eine Schädigung der Zelle vermieden werden.

Eine weitere vorteilhafte Ausgestaltung des Verfahrens gemäß der Erfindung sieht vor, dass in Reaktion darauf, dass die Brennstoffzellenspannung und/oder eine Einzelzellenspannung einen vorbestimmten Schwellenwert überschreitet, Energie über eine zwischen die Anode und die Kathode das Polymerelektrolytbrennstoffzellensystems geschaltete elektrische Spannungsbegrenzungslast dissipiert wird. Durch diese Maßnahme lässt sich der Wasserstoffpartialdruck auf der Anodenseite zusätzlich regulieren, da die Spannungsbegrenzungsast den Wasserstoffverbrauch der Brennstoffzelle regulieren lässt, mit welcher auch bei kritischen Zuständen wie dem Hochfahren oder dem Leerlaufbetrieb eine Schädigung der Zelle wirksam vermieden wird. Die dissipierte elektrische Energie kann für die Versorgung der Brennstoffzellensystemperipherie verwendet werden. Überschüssige elektrische Energie muss nicht dissipiert werden, da der Wasserstoffpartialdruck durch die anodenseitigen Betriebsparameter entsprechend reduziert werden kann.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Figur 1:: schematische Darstellung eines Anodenmoduls in einer bevorzugten Ausführungsform der Erfindung, welche an ein PEM-Brennstoffzellenmodul angeschlossen ist;
- Figur 2:: schematische Darstellung des Verlaufs eines beispielhaften Verfahrens gemäß der Erfindung, wobei Teil (a) den zeitlichen Verlauf des Stromes und der Leistung; Teil (b) den zeitlichen Verlauf der Brennstoffzellenspannung und Einzelzellenspannungen und Teil (c) den zeitlichen Verlauf des Wasserstoffpartialdrucks und der Ventilstellung eines Spülventils veranschaulicht.

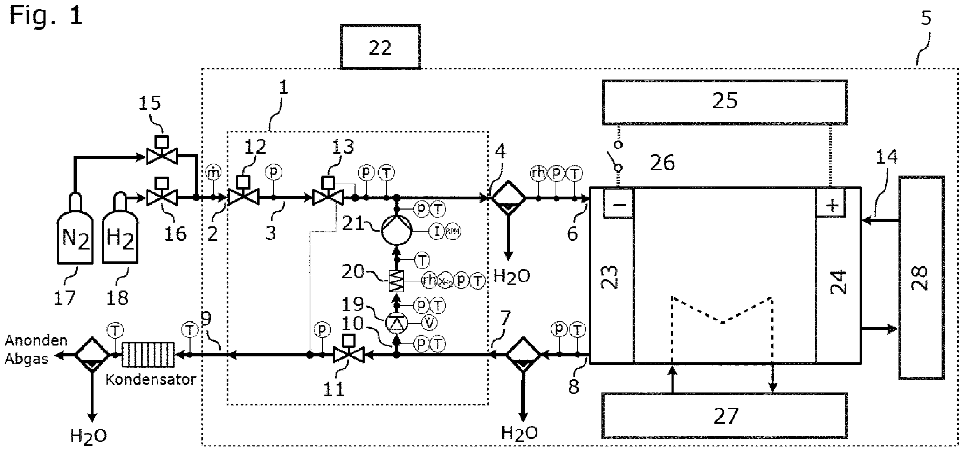

Die Figur 1 zeigt schematisch ein Anodenmodul 1 in einer bevorzugten Ausgestaltung der Erfindung. Das Anodenmodul 1 weist einen Einlass 2 für Betriebsgas in eine Betriebsgasleitung 3 auf. Weiter weist das Anodenmodul 1 einen Anodenauslass 4 auf. Der Anodenauslass 4 ist an einen Anodeneingang 6 an ein PEM-Brennstoffzellenstapel 5 angeschlossen. Der PEM-Brennstoffzellenstapel 5 ist nur schematisch dargestellt. Es besteht aus einem Stapel Einzelzellen, von denen in der schematischen Darstellung gemäß Figur 1 nur eine Einzelzelle zu erkennen ist. Weiter weist das Anodenmodul 1 einen Anodenabgaseinlass 7 auf, welcher mit einem Anodenabgasauslass 8 des PEM-Brennstoffzellensstapels 5 verbunden ist.

Das Anodenmodul 1 weist weiter eine Anodenabgasauslassleitung 9 auf. Der Anodenabgaseinlass 7 des Anodenmoduls 1 kommuniziert über eine Rezirkulationsleitung 10 mit der Betriebsgasleitung 3 und dem Anodenauslass 4 des Anodenmoduls 1. Die Anodenabgasauslassleitung 9 des Anodenmoduls 1 weist stromabwärts von der Rezirkulationsleitung 10 ein linear ansteuerbares Spülventil 11 auf. In der Betriebsgasleitung 3 ist stromaufwärts von der Rezirkulationsleitung 10 und stromabwärts von einem Versorgungsventil 12 ein Differenzdruckregler 13 angeordnet. Der Differenzdruckregler 13 kommuniziert über eine in der Figur 1 nicht dargestellte Pilotleitung mit dem Kathodensystem 14. Der Differenzdruckregler 13 stellt einen vorgegebenen Differenzdruck zwischen dem Anodeneingang 6 und den Kathodensystem 14 des PEM-Brennstoffzellensystem 5 sicher.

Der Einlass 2 ist über ein Absperrventil 15 für Stickstoff mit einem Stickstoffreservoir 17 und über ein Absperrventil 16 für Wasserstoff mit einem Wasserstoffreservoir 18 verbunden.

In der Rezirkulationsleitung 10 befinden sich in Strömungsrichtung von der an dem Anodenabgaseinlass 7 hin zum Anodenauslass 4 des Anodenmoduls 1 nacheinander ein Rotameter 19, ein Wasserstoffpartialdrucksensor 20 und eine Rezirkulationspumpe 21.

Das Anodenmodul 1 weist eine in der Figur 1 nur schematisch angedeutete Reglereinheit 22 auf. Mit der Reglereinheit 22 stehen eine Steuerung des Spülventils 11, eine Steuerung des Versorgungsventils 12, eine Steuerung des Differenzdruckreglers 13, eine Steuerung des Absperrventils für Stickstoff 15, eine Steuerung für das Absperrventil 16 für Wasserstoff, ein Signalausgang des Rotameters 19, ein Signalausgang des Wasserstoffpartialdrucksensors 20 sowie eine Steuerung der Rezirkulationspumpe 21 im Sinne eines Regelkreises in Wirkverbindung.

Die Verbindungen sind in der Figur 1 aus Gründen der Übersichtlichkeit nicht dargestellt.

Das PEM-Brennstoffzellensystem 5 weist eine Anode 23 und eine Kathode 24 auf. Zwischen die Anode 23 und die Kathode 24 des PEM-Brennstoffzellensystem 5 ist über einen Lastschalter 26 eine regulierbare Gleichstromlast 25 geschaltet. Das Brennstoffzellensystem 5 weist ein nur schematisch dargestelltes Kühlsystem 27 auf. Der Lastschalter 26 steht ebenfalls in Wirkverbindung mit der Reglereinheit 22 des Anodenmoduls 1.

Die Kathode 24 des PEM-Brennstoffzellensystems 5 ist über ein nur schematisch angedeutetes Kathodenmodul 28 versorgt.

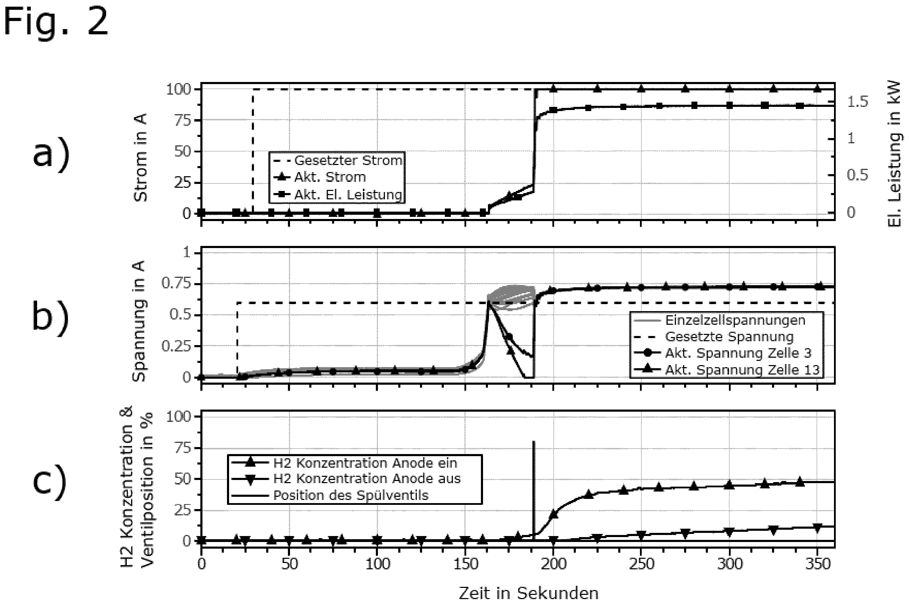

Die Figur 2 veranschaulicht den zeitlichen Ablauf der Durchführung eines Verfahrens nach der Erfindung. Dabei veranschaulicht Figur 2 (a) den auf der horizontalen Achse aufgetragenen zeitlichen Verlauf des Stromes (vergleiche linke Abszisse gemessen in Ampere sowie die elektrische Leistung (vergleiche rechte Ordinate gemessen in kW).

Im Teil Figur 2 (b) ist der zeitliche Verlauf der Zellspannungen auf der Ordinate, gemessen in Volt, aufgezeichnet.

Schließlich zeigt Figur 2 (c) auf der Ordinate die Wasserstoffkonzentration sowie die Stellung des Spülventils 11, jeweils in Prozent.

In Figur 2 (a) ist mit gestrichelter Linie der Sollwert für den Strom skizziert. In einer Strichpunktlinie ist der tatsächliche gemessene Strom aufgetragen gemäß der linken Skala der Ordinate. Ferner ist in einer mit X-en versehenen Kurve die elektrische Leistung aufgetragen.

In Figur 2 (b) ist mit gestrichelter Linie die Sollspannung der Brennstoffzelle eingetragen. Ferner sind die gemessenen Einzelzellspannungen eingetragen. Dabei ist in einer Strichpunktlinie beispielhaft die Spannung einer Zelle Nr. 13 und mit einer gepunkteten Linie beispielhaft die Einzelzellspannung der Zelle Nr. 3 aufgetragen.

Schließlich sind in Figur 2 (c) mit einer Strichpunktlinie die Wasserstoffkonzentration am Anodeneingang 6 und mit einer X-Linie die Stellung des Spülventils 11 aufgetragen. Mit durchgezogener Linie sind in Figur 2 (c) die Werte für die Ventilstellung in Prozent aufgetragen.

Das erfindungsgemäße Verfahren wird nachfolgend unter Bezugnahme auf die Figur 2 im Ablauf beschrieben.

Demnach befindet sich die PEM-Brennstoffzelle 5 zunächst, d. h. in dem Zeitfenster 0 Sekunden bis etwa 24 Sekunden ausgeschalteten Zustand. In diesem Zustand betragen Strom und Leistung jeweils 0 und der Sollwert ist ebenfalls auf 0 gesetzt, wie in Figur 2 (a) zu erkennen.

Ferner liegt an den PEM-Brennstoffzellensystem 5 auch noch keine Spannung an, wie in Figur 2 (b) veranschaulicht. Auch der Sollwert der Spannung ist auf 0 gesetzt. Entsprechend zeigt Figur 2 (c), dass das Spülventil 11 in der Stellung 0%, d. h. vollständig geschlossen, steht und dass die Wasserstoffkonzentration am Anodeneingang 6 0% beträgt.

Das PEM-Brennstoffzellensystem 5 wird nun nach einem Ausführungsbeispiel des erfindungsgemäßen Verfahrens ausgehend von dem beschriebenen ausgeschalteten Zustand hochgefahren. Dazu wird zunächst eine Spülung des Systems aus dem Stickstoffreservoir 17 über das Absperrventil 15 durch das Versorgungsventil 12 in das Anodenmodul 1 eingeleitet, um die im System befindliche Luft zu verdrängen. Entsprechend beträgt die Wasserstoffkonzentration am anodenseitigen Ein- und Auslass 0 Volumenprozent. Ebenfalls fließt durch die Gleichstromlast 25 kein Strom.

Im nächsten Schritt bleibt das Spülventil 11 geschlossen, wie bei etwa 15 Sekunden wie bei Figur 2 (c) zu erkennen. Weiter wird jedoch durch Schließen des Absperrventils 15 für Stickstoff die Zufuhr von Stickstoff aus dem Stickstoffreservoir 17 gestoppt. Gleichzeitig wird über die Reglereinheit 22 das Absperrventil 16 für Wasserstoff geöffnet, sodass über das Wasserstoffreservoir 18 über das Versorgungsventil 12, welches ebenfalls von der Reglereinheit 22 geöffnet wird, Wasserstoff in die Betriebsgasleitung 3 des Anodenmoduls 1 einströmt. Es kommt dadurch zu einem allmählichen Anstieg des Wasserstoffpartialdrucks und infolgedessen zu einem allmählichen Anstieg der Zellspannung, da Stickstoff durch die Brennstoffzellenmembran diffundiert und Wasserstoff nachgeführt wird. Der Anstieg des Wasserstoffpartialdrucks tritt am Anodenauslass 4 des Anodenmoduls 1 auf, welcher mit dem Anodeneingang 6 des PEM-Brennstoffzellensystems 5 kommuniziert. Dabei ist der Wasserstoffpartialdruck in Figur 2 (c) zunächst noch kaum als steigend zu erkennen. Jedoch zeigt Figur 2 (b) ab etwa 15 Sekunden bereits einen allmählichen Anstieg aller Einzelzellspannungen infolge der Wasserstoffzufuhr.

Dieser Zustand des allmählichen Anstiegs des Wasserstoffpartialdrucks nach Schließen des Absperrventils 15 für Stickstoff und Öffnen des Absperrventils 16 für Wasserstoff vollzieht sich in etwa stetig im Zeitfenster 15 Sekunden bis 150 Sekunden. Obwohl ausweislich der Figur 2 (b) in diesem Zeitfenster die Zellspannungen allmählich ansteigen, fließt ausweislich Figur 2 (a) jedoch noch kein Strom. Der Grund ist, dass die minimale Durchschnittsspannung des Brennstoffzellenstapels 5 für die Freigabe eines Stromflusses durch die Reglereinheit 22 noch nicht freigegeben ist.

Aufgrund des zunehmenden Anstiegs des Wasserstoffpartialdrucks, der im Zeitintervall ab 150 Sekunden auch allmählich in Figur 2 (c) erkennbar ist, steigen auch die Zellspannungen gemäß Figur 2 (b) weiter an. Es wird ein Punkt erreicht, bei etwa 160 Sekunden, bei dem die mittlere Zellspannung des PEM-Brennstoffzellensystems 5 die minimale Durchschnittsspannung für die Stromfreigabe erreicht. Wie in Figur 2 (a) bei etwa 160 Sekunden zu erkennen, fließt nun allmählich ein Strom.

In dem Zeitfenster von 150 Sekunden bis etwa 180 Sekunden zeigt sich in dem Ausführungsbeispiel nun eine inhomogene Verteilung der Einzelzellspannungen. Dabei fallen bei etwa 160 Sekunden die Einzelzellspannungen der Zellen 3 und 13 unvermittelt sprunghaft ab. Die Zelle 13 fällt sogar auf 0 Volt ab, wie in Figur 2 (b) zu erkennen. Dies ist nach den Erkenntnissen der Erfinder augenscheinlich auf eine Wasserstoffunterversorgung in den betroffenen Zellen, insbesondere in Zelle 13, zurückzuführen.

Hier hingegen wird nun mit dem erfindungsgemäßen Verfahren gegengesteuert. Dazu wird bei etwa 180 Sekunden das Spülventil 11 über die Reglereinheit 22 für eine Zeitdauer von 200 ms zu 80% geöffnet, wie in Figur 2 (c) zu erkennen. Dies führt unmittelbar nach der Öffnung des Spülventils 11 dazu, dass die Einzelzellspannungen der beiden Zellen 3 und 13, welche bei etwa 160 Sekunden abgefallen waren, sprungartig in etwa den Sollwert erreichen, auf welchem sich die übrigen Zellen des Stapels bereits befinden. Wie in Figur 1 (a) zu erkennen, steigt unmittelbar auch die elektrische Leistung und der elektrische Strom durch das PEM-Brennstoffzellensystem 5 in etwa auf den Sollwert an. Der Sollwert beträgt in dem hier beschriebenen Ausführungsbeispiel 100 Ampere. Da der Strom bei diesem Beispiel eingeregelt wird, läuft das PEM-Brennstoffzellensystem 5 sodann im galvanostatischen Betrieb, wie im Zeitfenster 200 Sekunden bis 350 Sekunden in der Figur 2 veranschaulicht.

Erfindungsgemäß konnte somit durch Messen von Einzelzellspannungen des PEM-Brennstoffzellensystems 5 durch den regelnden Eingriff unter Vermittlung der Reglereinheit 22 zum kurzzeitigen Öffnen des Spülventils 11 der Wasserstoffpartialdruck am Anodenauslass, hier insbesondere der Zellen 3 und 13, hochgeregelt werden, um einen das System 5 schädigenden Zustand zu vermeiden.

Erfindungsgemäß werden vorzugsweise somit Einzelzellspannungen des Stapels gemessen und der Reglereinheit 22 als Eingangsgröße zugeführt, um sie in die Regelung einzubeziehen. Weiter kann im Rahmen des erfindungsgemäßen Verfahrens über die Reglereinheit 22 und den Lastschalter 26 die Gleichstromlast 25 zur weiteren regelnden Beeinflussung des Systems geschaltet werden.

Somit vermag das erfindungsgemäße Verfahren das PEM-Brennstoffzellensystem 5 mit begrenzter Zellspannung unter Vermeidung die Anode 23 des Systems 5 schädigender Zustände zu starten.

Im Rahmen der Erfindung vermag die Reglereinheit 22 den Wasserstoffpartialdruck jedoch auch zu reduzieren, indem über das Absperrventil 15 Stickstoff aus dem Stickstoffreservoir 17 eingeleitet wird, um den Stickstoffpartialdruck hochzusetzen und infolgedessen den Wasserstoffpartialdruck herabzusetzen. Das erfindungsgemäße Verfahren, Anodenmodul 1 und PEM-Brennstoffzellensystem 5 ermöglichen es somit auch den Leerlaufbetrieb sowie das Herunterfahren des PEM-Brennstoffzellensystem 5 degradationsvermeidend, effizient und dynamisch zu gestalten.

Das erfindungsgemäße Anodenmodul 1 ermöglicht unterschiedliche Betriebsmodi. Zum einen einen Sackgassenbetrieb und zum anderen einen Rezirkulationsbetrieb. Beim Sackgassenbetrieb wird der Anode 23 Wasserstoff zugeführt und das Anodenabgas wird über den Abgasauslass 8 des Brennstoffzellensystem 5 in den Anodenabgaseinlass 7 des Anodenmoduls 1 durch das geöffnete Spülventil 11 durch die Anodenabgaseinlass 9 in die Umgebung ausgelassen.

Wenn im Sackgassenbetrieb eine ungleichförmige Verteilung von Wasserstoff im Anodensystem auftritt, kann das Anodenmodul 1 in den Rezirkulationsbetrieb geschaltet werden. Mit diesem kann erfindungsgemäß eine gleichförmigere Verteilung von Wasserstoff erreicht werden. Der Grund ist, dass Wasserstoff kontinuierlich im Anodensystem zirkuliert. Hierzu dient in dem erfindungsgemäßen Anodenmodul 1 zur Steuerung die Rezirkulationspumpe 21. Diese kann über die Reglereinheit 22 ein- oder ausgeschaltet werden.

Das erfindungsgemäße Anodenmodul 1 und das erfindungsgemäße Verfahren sind insbesondere für den Einsatz von PEM-Brennstoffzellensystemen 5 im Mobilitätssektor nützlich. Dies gilt insbesondere, wenn häufige Start/Stoppzyklen sowie veränderliche Betriebsanforderungen zu erwarten sind. Dies gilt insbesondere für luftfahrttechnische Anwendungen, wo ein schnelles Hochfahren der Leistung aus einem längeren Leerlaufzustand häufige Praxis ist.

### BEZUGSZEICHENLISTE

- 1: Anodenmodul
- 2: Einlass
- 3: Betriebsgasleitung
- 4: Anodenauslass
- 5: PEM-Brennstoffzellenstapel
- 6: Anodeneingang
- 7: Anodenabgaseinlass
- 8: Abgasauslass
- 9: Anodenabgasauslassleitung
- 10: Rezirkulationsleitung
- 11: Spülventil
- 12: Versorgungsventil
- 13: Differenzdruckregler
- 14: Kathodensystem
- 15: Absperrventil für N₂
- 16: Absperrventil für H₂
- 17: N₂-Reservoir
- 18: H₂-Reservoir
- 19: Rotameter
- 20: Wasserstoffpartialdrucksensor
- 21: Rezirkulationspumpe
- 22: Reglereinheit
- 23: Anode
- 24: Kathode
- 25: Gleichstromlast
- 26: Lastschalter
- 27: Kühlsystem
- 28: Kathodenmodul

## Patentansprüche

1. Anodenmodul (1) für ein Polymerelektrolytbrennstoffzellensystem (5), umfassend mindestens einen Einlass (2) zur Einleitung von Betriebsgas in eine Betriebsgasleitung (3) und einen Anodenauslass (4) zum Anschließen an einen Anodeneingang (6) des Polymerelektrolytbrennstoffzellensystems (5), **dadurch gekennzeichnet, dass** Regelungsmittel (22) zum Regeln des Wasserstoffpartialdrucks am Anodenauslass (4) in Abhängigkeit von Betriebsparametern des Polymerelektrolytbrennstoffzellensystems (5) vorgesehen sind.

2. Anodenmodul (1) nach Anspruch 1, **dadurch gekennzeichnet, dass** die Betriebsparameter eine Brennstoffzellenspannung, vorzugsweise mindestens eine Einzelzellspannung, des Polymerelektrolytbrennstoffzellensystems (5) umfassen.

3. Anodenmodul (1) nach Anspruch 1 oder 2, **dadurch gekennzeichnet, dass** mit den Regelungsmitteln (22) in Wirkverbindung stehende Inertgasversorgungsmittel (15, 17) zum Einleiten eines Inertgases, insbesondere Stickstoff, in den Einlass (2) vorgesehen sind.

4. Anodenmodul (1) nach einem der vorhergehenden Ansprüche,
**dadurch gekennzeichnet, dass** die
Inertgasversorgungsmittel (15, 17) ein, insbesondere linear ansteuerbares, Regelventil (15) umfassen.

5. Anodenmodul (1) nach einem der vorhergehenden Ansprüche,
**dadurch gekennzeichnet, dass** ein Anodenabgaseinlass (7) zum Einleiten von Anodenabgas des Polymerelektrolytbrennstoffzellensystems (5) vorgesehen ist.

6. Anodenmodul (1) nach einem der vorhergehenden Ansprüche,
**dadurch gekennzeichnet, dass** eine Anodenabgasauslassleitung vorgesehen ist.

7. Anodenmodul (1) nach einem der vorhergehenden Ansprüche,
**dadurch gekennzeichnet, dass** die Anodenabgasauslassleitung (9) ein mit den Regelungsmitteln (22) in Wirkverbindung stehendes, insbesondere linear regelbares, Spülventil (11) aufweist.

8. Anodenmodul (1) nach einem der vorhergehenden Ansprüche,
**dadurch gekennzeichnet, dass** eine den Anodenabgaseinlass (7) mit dem Anodenauslass (4) verbindende Rezirkulationsleitung (10) vorgesehen ist.

9. Anodenmodul (1) nach einem der vorhergehenden Ansprüche, **dadurch gekennzeichnet, dass** die Rezirkulationsleitung (10) eine mit den Regelungsmitteln (22) in Wirkverbindung stehende Rezirkulationspumpe (21) aufweist.

10. Anodenmodul (1) nach einem der vorhergehenden Ansprüche, **dadurch gekennzeichnet, dass** die Rezirkulationsleitung (10) Rückschlagverhinderungsmittel (19) zur Verhinderung eines Gasstroms in Richtung vom Anodenauslass (4) zum Anodenabgaseinlass (7) aufweist.

11. Anodenmodul (1) nach einem der vorhergehenden Ansprüche, **dadurch gekennzeichnet, dass** die Regelungsmittel (22) zum Steuern einer zwischen die Anode (23) und die Kathode (24) des Polymerelektrolytbrennstoffzellensystems (5) geschalteten elektrischen Spannungsbegrenzungslast (25) ausgebildet sind.

12. Anodenmodul (1) nach einem der vorhergehenden Ansprüche,
**dadurch gekennzeichnet, dass** die Betriebsgasleitung (3) ein mit einer Kathode (24) des Polymerelektrolytbrennstoffzellensystems (5) in Wirkverbindung bringbares Differenzdruckventil (13) aufweist, um einen vorgegebenen Differenzdruck zwischen dem Anodenauslass (4) und der Kathode (24) einzustellen.

13. Polymerelektrolytbrennstoffzellensystem (5) mit einem Anodenmodul (1) nach einem der vorhergehenden Ansprüche.

14. Verfahren zum Betreiben eines
Polymerelektrolytbrennstoffzellensystems (5), bei dem ein Betriebsparameter, insbesondere eine Brennstoffzellenspannung, des Polymerelektrolytbrennstoffzellensystems (5) gemessen wird, **dadurch gekennzeichnet, dass** in Abhängigkeit des gemessenen Betriebsparameters, insbesondere einer gemessenen Brennstoffzellenspannung, der anodenseitige Wasserstoffpartialdruck variiert wird.

15. Verfahren nach Anspruch 14, **dadurch gekennzeichnet, dass** der Wasserstoffpartialdruck vermindert wird, indem der Anode (23) ein Inertgas, vorzugsweise Stickstoff, zugeführt wird.

16. Verfahren nach Anspruch 14 oder 15, **dadurch gekennzeichnet, dass** der Wasserstoffpartialdruck erhöht wird, indem ein Anodenabgas abgeführt wird.

17. Verfahren nach einem der Ansprüche 14 bis 16, **dadurch gekennzeichnet, dass** das Polymerelektrolytbrennstoffzellensystem (5) aus einem Ruhezustand, bei welchem sich sowohl an der Anode (23) als auch an der Kathode 24) des Polymerelektrolytbrennstoffzellensystems (5) Luft befindet, hochgefahren wird.

18. Verfahren nach einem der Ansprüche 14 bis 17, **dadurch gekennzeichnet, dass** mindestens eine Einzelzellspannung gemessen wird.

19. Verfahren nach einem der Ansprüche 14 bis 18, **dadurch gekennzeichnet, dass** in Reaktion darauf, dass die Brennstoffzellenspannung und/oder eine Einzelzellspannung einen vorbestimmten Schwellenwert unterschreitet, der Wasserstoffpartialdruck erhöht wird.

20. Verfahren nach einem der Ansprüche 14 bis 19, **dadurch gekennzeichnet, dass** in Reaktion darauf, dass die Brennstoffzellenspannung und/oder eine Einzelzellspannung einen vorbestimmten Schwellenwert überschreitet, der Wasserstoffpartialdruck abgesenkt wird.

21. Verfahren nach einem der Ansprüche 14 bis 20, **dadurch gekennzeichnet, dass** in Reaktion darauf, dass die Brennstoffzellenspannung und/oder eine Einzelzellspannung einen vorbestimmten Schwellenwert überschreitet, über eine zwischen die Anode (23) und die Kathode (24) des Polymerelektrolytbrennstoffzellensystems (5) geschaltete elektrische Spannungsbegrenzungslast (25) Energie dissipiert wird.
